(19) Europäisches Patentamt / European Patent Office / Office européen des brevets

(11) **EP 3 282 283 B1**

(12) **FASCICULE DE BREVET EUROPEEN**

(45) Date de publication et mention de la délivrance du brevet:
**19.08.2020 Bulletin 2020/34**

(51) Int Cl.:
***G01S 13/931*** *(2020.01)*

(21) Numéro de dépôt: **17181250.6**

(22) Date de dépôt: **13.07.2017**

(54) **PROCÉDÉ DE DÉTECTION RADAR FMCW À RÉSOLUTION MULTIPLE ET RADAR METTANT EN OEUVRE UN TEL PROCÉDÉ**

FMCW-RADAR-DETEKTIONSVERFAHREN MIT MEHRFACHAUFLÖSUNG, UND RADAR ZUR ANWENDUNG DIESES VERFAHRENS

FMCW RADAR DETECTION METHOD WITH MULTIPLE RESOLUTION AND RADAR USING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.08.2016 FR 1601224**

(43) Date de publication de la demande:
**14.02.2018 Bulletin 2018/07**

(73) Titulaire: **Thales**
**92400 Courbevoie (FR)**

(72) Inventeurs:
• **CORNIC, Pascal**
**29820 GUILERS (FR)**
• **LE BIHAN, Patrick**
**29870 LANNILIS (FR)**
• **QUELLEC, Jean-Michel**
**29810 PLOUMOGUER (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A1- 0 863 409   FR-A1- 2 987 683
US-A1- 2010 277 361   US-A1- 2016 116 570
US-A1- 2016 131 742

EP 3 282 283 B1

**Description**

La présente invention concerne un procédé de détection radar, utilisant une onde d'émission de type FMCW, à résolution multiple. Elle concerne également un radar mettant en œuvre un tel procédé. L'invention s'applique notamment dans le domaine des radars pour véhicules automobiles. Plus généralement elle peut s'appliquer aux radars FMCW.

Les radars pour automobiles ont été introduits pour des fonctions d'aide à la conduite, plutôt orientées vers le confort, comme par exemple l'adaptation à la vitesse de croisière pour l'utilisation sur autoroute, dite fonction ACC (Adaptative Cruise Control), ou le « Stop and Go » en conduite urbaine.Ils utilisent les ondes millimétriques, en particulier la bande 76-81 GHz.

Grâce à l'évolution des technologies, les applications actuelles visent également des fonctions de sécurité de type anticollision, et il est même envisagé à relativement court terme d'aboutir au véhicule entièrement autonome, la perception de l'environnement étant assurée par l'association d'un certain nombre de capteurs, reposant sur différentes technologies : radar, vidéo, infrarouge notamment.

En raison de ses capacités tout-temps, le radar reste dans ce cadre un capteur prépondérant et ses capacités de détection et de discrimination doivent être étendues pour garantir la fiabilité globale du système. En ce qui concerne l'anticollision, le capteur radar doit en particulier être capable de distinguer parmi les objets fixes qu'il détecte, ceux qui correspondent à des éléments d'infrastructure routière, de ceux qui correspondent à des véhicules immobilisés sur la voie qui constituent potentiellement un risque de collision. Dans ce contexte, il est notamment fondamental qu'il ne génère pas de fausses alarmes pouvant entraîner un freinage ou une manœuvre d'évitement d'urgence, sans cause réelle, en particulier lorsque le véhicule se déplace à grande vitesse.Cela impose une sensibilité et des capacités de discrimination accrues permettant d'appréhender la situation à l'avant du véhicule à grande distance, typiquement supérieure à 200 m. Il peut être également nécessaire de détecter les bords des routes.

Dans ce contexte, la résolution en distance doit être très grande sur les objets fixes, ce qui se traduit par un grand nombre de cases distances pour couvrir la portée du radar et par conséquent des besoins en traitement numérique très importants pour effectuer le traitement en temps réel.Dans le cas d'un radar à formation de faisceaux par le calcul, qui doit traiter simultanément plusieurs directions angulaires, ce besoin se trouve multiplié par le nombre de faisceaux à traiter.

Par ailleurs, en ce qui concerne les radars automobiles, le coût du capteur est extrêmement contraint, et les ressources de calcul sont par conséquent limitées. Pour une application automobile, il est donc nécessaire de trouver des solutions pour optimiser l'utilisation des ressources de traitement en fonction du contexte.

Un problème technique à résoudre est d'obtenir des capacités de discrimination suffisantes, tout en limitant l'impact sur le volume de traitement. A ce jour le problème n'est pas résolu ou l'est de manière insatisfaisante.

Les radars automobiles utilisent des formes d'onde différenciées pour la courte portée et pour la longue portée, les deux modes étant exclusifs.Les formes d'ondes sont essentiellement à modulation de fréquence, dites FMCW, ou combinées à des sauts de fréquence dites alors, FSK FMCW.Les formes d'ondes FMCW peuvent alterner dans le temps des rampes de fréquence différentes soit pour optimiser la bande d'émission selon la portée désirée, soit pour résoudre les problèmes d'ambigüité distance/vitesse inhérentes à ce type de radar.Cela se traduit par une perte de rendement de la forme d'onde puisque les différents motifs d'émission partagent le temps d'intégration du radar.

En mode urbain, à vitesse réduite, la résolution distance est privilégiée. Elle est typiquement de moins d'un mètre, ce qui correspond à une bande d'émission « instantanée » importante, typiquement plusieurs centaines de mégahertz. En revanche le domaine distance est faible, et le nombre de cases distance à traiter reste modeste.

Sur autoroute, à vitesse élevée, la résolution vitesse est privilégiée, ce qui implique une résolution Doppler importante, typiquement de l'ordre de 25 Hz, correspondant à une discrimination de 5 cm/sec pour un radar fonctionnant à 76 GHz.

Ce dernier cas correspond au fonctionnement en mode ACC dans lequel la séparation des véhicules à l'avant du porteur du radar s'effectue par la vitesse. La résolution distance est relativement faible, typiquement de plusieurs mètres, et ne permet pas une discrimination des obstacles suffisante pour engager de façon automatique un freinage d'urgence à haute vitesse. Là encore, le nombre de cases distance à traiter reste modeste en raison de la faible résolution, même si le domaine distance est plus important.

Aucun de ces deux modes de fonctionnement ne permet donc de réaliser une fonction anticollision à vitesse élevée, qui nécessite à la fois une haute résolution distance et une haute résolution vitesse.

Un document US 2010/277361 A1 divulgue un procédé de détection radar mettant en œuvre une forme d'onde FMCW.

Un but de l'invention est notamment de résoudre le problème précité. A cet effet, l'invention a pour objet unprocédé de détection radar d'une cible mettant en œuvre une forme d'onde du type FMCW, la forme d'onde à l'émission étant réalisée selon un motif de récurrence de période donnée Tr couvrant une bande de fréquences d'émission de largeur donnée B, chaque motif étant découpé selon un nombre donné P de sous-motifsde durée Tr/P couvrant une bande de fréquence d'excursion $\Delta F=B/P$, lesdits sous-motifs étant espacés entre eux d'un écart de fréquence égal à ΔF, ledit procédé effectue au moins :

- un premier traitement de compression distance réalisant une compression distance à basse résolution à l'échelle de chaque motif de récurrence à partir d'une fraction B/P de ladite bande d'émission de largeur B, correspondant à la bande de fréquence couverte par chacun desdits sous-motifs;
- un traitement Doppler sur un nombre donné N de récurrences successives de façon à constituer P cartes distance-Doppler ambiguës à basse résolution en distance, lesdites cartes étant segmentées selon au moins deux domaines de vitesse dont l'un correspond aux cibles fixes ;
- un deuxième traitement de compression distance à partir desdites cartes distance-Doppler, dont la résolution est fonction du domaine de vitesses auquel appartient la vitesse attendue de ladite cible.

Dans ledit premier traitement ladite compression consiste, pour chaque sous-motif en une compression distance par démodulation directe du signal émis par le signal reçu, suivie d'une transformée de Fourier sur M/P points selon une démodulation synchrone aboutissant pour chaque motif à la constitution de M/2P cases distances, M/P étant un nombre entier.

Ledit traitement Doppler effectue par exemple, sur lesdites N récurrences successives, une transformée de Fourier sur l'axe Doppler pour chacune desdites cases distance et pour chaque sous-motif, aboutissant à la constitution desdites P cartes distance-Doppler, chacune de dimension M/2P cases distances par N cases Doppler.

Ladite résolution est par exemple maximum pour les cibles fixes. Ladite vitesse attendue correspondant à une cible fixe, le deuxième traitement effectue par exemple la compression selon la résolution maximum en réalisant l'intégration cohérente desdites P cartes distance-Doppler selon chacun des filtres distances centrés sur lesdits sous-motifs de résolution $\frac{C}{2B}$, C étant la célérité de la lumière. Ladite intégration cohérente est par exemple réalisée après compensation des retards et des différences de fréquence entre lesdits sous-motifs.

Ladite vitesse attendue correspondant à une cible mobile, ledit deuxième traitement réalise une intégration cohérente sur l'ensemble desdites cartes distance-Doppler pour donner une nouvelle carte distance-Doppler, ladite intégration cohérente étant réalisée de telle façon qu'une intégration cohérente soit réalisée sur chaque regroupement de cartes distance-Doppler correspondant à des sous-motifs couvrant des bandes de fréquences adjacentes.

Dans un mode de réalisation possible, ladite vitesse attendue étant élevée, au dessus d'un seuil donné, le deuxième traitement effectue l'intégration non cohérente d'au moins deux cartes distance-Doppler de même résolution distance.

L'ordre desdits sous-motifs est par exemple modifié d'une rafale d'émission à la suivante.

La période Tr dudit motif de récurrence est par exemple ajustée en fonction de la vitesse du porteur dudit radar et de la fréquence d'émission pour respecter la condition de non-ambiguïté Doppler sur les cibles en vitesse de rapprochement maximum.

Une formation de faisceaux par le calcul étant réalisée en réception sur chacune desdites cartes distance-Doppler à basse résolution en distance, le deuxième traitement est par exemple réalisé pour chaque faisceau.

Dans un mode de mise en œuvre particulier, ladite résolution en distance est fonction de la direction du faisceau en réception.

L'ambiguïté de la mesure de distance est par exemple levée par la mesure de la fréquence Doppler.

L'invention concerne également un radar de type FMCW apte à mettre en œuvre un tel procédé. Ce radar étant par exemple apte à équiper un véhicule automobile.

D'autres caractéristiques et avantages de l'invention apparaîtront à l'aide de la description qui suit, faite en regard de dessins annexés qui représentent :

- La figure 1, une forme d'onde radar de type FMCW utilisée dans l'art antérieur ;
- La figure 2, une forme d'onde radar de type FMCW selon l'invention ;
- La figure 3, une forme d'onde radar de type FMCW selon l'invention où les sous-motifs sont présentés dans un ordre différent ;
- La figure 4, deux rafales d'émission radar successives d'une onde selon l'invention ;
- La figure 5, une illustration des filtres distances associés aux sous-motifs d'une onde selon l'invention ;
- La figure 6, une onde radar selon l'invention où les sous-motifs sont rangés dans un ordre particulier ;
- La figure 7, un exemple de décomposition de cartes distance-Doppler selon des domaines de vitesse.

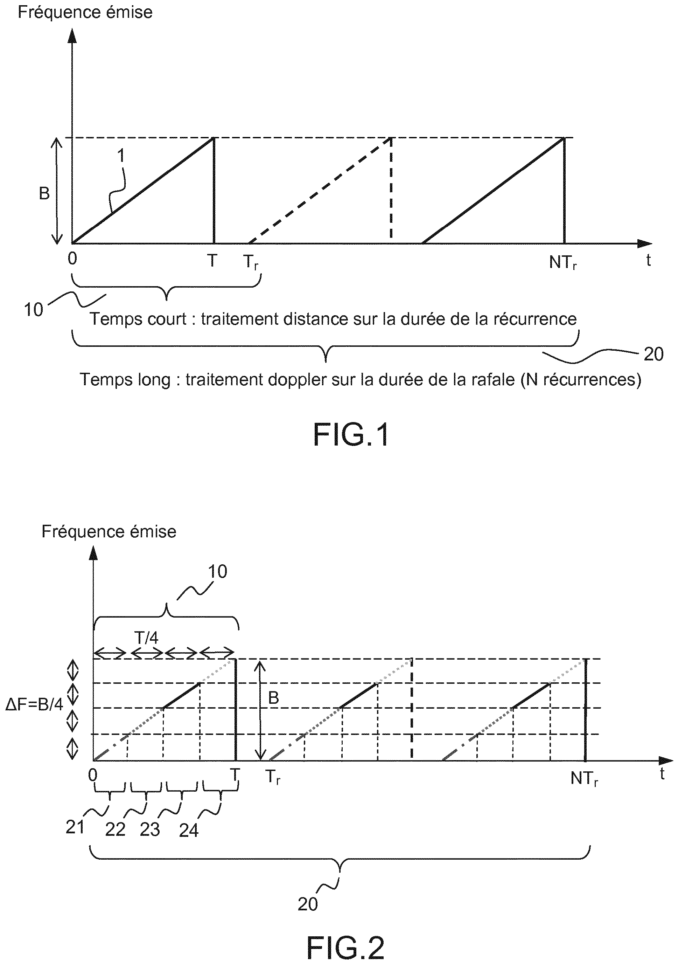

La figure 1 rappelle l'art antérieur. Plus particulièrement, elle illustre la modulation de la fréquence émise, cette modulation étant du type FMCW.

On considère d'une façon générale un radar automobile monté sur un véhicule, dont le faisceau est orienté vers l'avant de celui-ci.Ce radar met en œuvre une forme d'onde modulée linéairement en fréquence selon le principe FMCW, bien connu de l'homme de l'art, conformément à la figure 1. Un premier traitement est effectué sur le temps court, à l'échelle de la récurrence 10 de durée Tr, visant à séparer les signaux reçus par une démodulation directe suivie d'une numérisation des signaux et d'une FFT sur P points, correspondant à la durée de la rampe 1 de fréquence.

Cette opération réalise une compression sur l'axe distance. En sortie de ce traitement, les signaux se répartissent dans P/2 cases distances ambiguës, la fréquence de battement $f_b$ d'un signal reçu à la distance D et de Doppler $F_d$ s'écrivant :

$$f_b = \frac{2BD}{CT} + F_d \quad (1)$$

Où :

B est la bande de fréquence émise ;
C est la vitesse de la lumière ;
D est la distance de la cible ;
T est la durée de la rampe de fréquence ;
$F_d$ est la fréquence Doppler.

La fréquence distance est donnée par :

$$f_{dist} = \frac{2BD}{CT} \quad (2)$$

et la résolution distance $\Delta D$ est déterminée, selon la relation classique, par:

$$\Delta D = \frac{C}{2B}$$

Par ailleurs la fréquence Doppler $F_d$ est donnée par la relation $F_d = \frac{2V_r}{\lambda}$ où $V_r$ est la vitesse radiale de la cible et $\lambda$ est la longueur d'onde du signal d'émission.

A la suite de ce traitement « temps court », on effectue un deuxième traitement « temps long », consistant pour chaque case distance ambiguë, à réaliser une deuxième FFT (ou DFT) sur N points, correspondant à la durée $NT_r$ d'une rafale Doppler 20.

En sortie de ce traitement, on obtient ainsi une carte distance-vitesse (ou distance-Doppler) comprenant pour P/2 cases distance ambiguës, N filtres vitesse non ambigus. Pour chaque cellule de la carte distance-vitesse ambiguë ayant donné lieu à une détection, l'estimation de la fréquence Doppler non ambiguë $F_d$ permet à partir de l'équation (1), de déduire de façon non ambiguë la fréquence distance de chacun des signaux détectés par :

$$f_{dist} = f_b - F_d$$

La résolution Doppler $\Delta F_d$ est donnée par

$$\Delta F_d = \frac{1}{NT_r} \, ,$$

où N est le nombre de récurrences dans la rafale Doppler.

On utilisera indifféremment par la suite le terme distance-Doppler ou distance-vitesse, ces deux termes étant équivalents du fait que la mesure Doppler correspond à une mesure de vitesse.

Dans un tel radar, le traitement nécessite N transformées de Fourier rapide (FFT) sur P points pour la compression distance et P/2 FFT sur N points pour la compression Doppler, ce qui implique des moyens de traitements importants.

Par exemple, pour une distance de détection maximum de 384 mètres et une résolution distance de 1,5 mètre, P=512.

Si l'on impose qu'il n'existe pas d'ambiguïté Doppler, pour une vitesse maximum $V_{rmax}$ de 130 km/h, soit 36 m/sec, et une longueur d'onde À de 3,9 mm, la durée maximum de la récurrence est dans ce cas Tr=27 μsec.

En considérant une durée de rafale Doppler typiquement de l'ordre de 40 ms et en choisissant un nombre de récurrence N en puissance de 2, on aboutit à N=2048 pour une durée de récurrence Tr=19,5 μsec.

Il est donc nécessaire d'effectuer 2048 FFT sur 512 points et 256 FFT de 2048 points, pour chaque voie de réception du radar, pendant la durée de la rafale Doppler, soit 40 ms, le traitement devant être effectué en temps réel. Pour un radar à formation de faisceaux par le calcul comprenant Q faisceaux, il est nécessaire pour chaque élément de la carte distance-vitesse de dimension P/2xN, d'effectuer en plus une compression angulaire par une FFT sur Q points. Le volume de calcul à réaliser en temps réel est ainsi très important vis-à-vis des ressources technologiques disponibles, en particulier si on veut utiliser des moyens de traitement bas coût.

La figure 2 illustre le traitement effectué par le procédé selon l'invention. Pour effectuer le traitement, on part d'une forme d'onde à l'émission, du type FMCW, avec dessous-motifs tels qu'illustrés par la figure 2. Plus précisément, on réalise une forme d'onde à l'émission selon un motif de période de récurrence Tr, chaque motif étant constitué de P sous-motifs 21, 22, 23, 24 de durée Tr/P correspondant à une rampe de fréquence d'excursion ΔF=B/P, les motifs étant espacés entre eux d'un écart en fréquence ΔF, l'ensemble couvrant ainsi la bande totale B. Dans l'exemple de la figure 2, P = 4.

Ayant posé le principe du découpage du motif de récurrence en P sous-motifs, avant d'engager le traitement radar, on effectue le choix de la forme d'onde FMCW en fonction de la vitesse du porteur du radar et de la situation de la circulation. Puis dans une deuxième étape, on détermine la résolution distance maximum du radar.

Au préalable, la fréquence de récurrence du radar est donc choisie en fonction de la vitesse du porteur pour garantir la non ambiguïté Doppler pour les cibles d'intérêt ayant la vitesse de rapprochement maximum.

Sur autoroute, typiquement, cette vitesse maximum correspond à la vitesse du porteur ou encore à la vitesse de rapprochement des obstacles fixes, typiquement 130 km/heure en France. On peut bien sûr considérer une autre valeur de vitesse maximum.

Sur route, cette vitesse correspond à la vitesse maximum relative de deux véhicules face à face, typiquement 180 km/heure en France. D'autres valeurs de vitesse sont bien sûr possibles.

Ainsi, on détermine la valeur maximum de la période de répétition de la forme d'onde de façon à respecter le critère de Nyquist pour la vitesse relative maximum, ce qui correspond à la relation :

$$T_r < \frac{\lambda}{4V_{rmax}}$$

où $V_{rmax}$ est la vitesse relative maximum des cibles considérées, λ la longueur d'onde du radar et $Tr$ la période de récurrence.

La fréquence de répétition $1/Tr$ peut ainsi être ajustée automatiquement entre deux motifs, en fonction de la vitesse du porteur et de la fréquence d'émission F pour respecter la condition de non ambiguïté Doppler sur les cibles en vitesse de rapprochement maximum.

On détermine également la résolution distance maximum du radar pour ne pas générer de migration de case distance à case distance sur les cibles en vitesse de rapprochement maximum pendant le temps d'intégration cohérent correspondant à la durée de la rafale Doppler $NT_r$, typiquement 40 ms.

Par exemple, pour une vitesse maximum $V_{rmax}$ de 130 km/h, soit 36 m/sec, la résolution distance maximum $\Delta D$ est de 1,5 mètres, correspondant au déplacement relatif de la cible pendant la rafale de durée 40 ms.

La bande maximum utile émise par le radar est dans ce cas $= \frac{C}{2\Delta D}$, soit dans cet exemple : B=100 MHz.

A titre d'exemple, le tableau 1 ci-dessous indique en situation autoroutière, les valeurs théoriques maximum de la durée de la récurrence et de la bande utile d'émission selon la vitesse porteur.

Tableau 1

| Vitesse porteur | 50 km/h | 70 km/h | 90 km/h | 110 km/h | 130 km/h |
|---|---|---|---|---|---|
| Vitesse relative maximum des cibles sur autoroute, correspondant à la vitesse de rapprochement des cibles fixes | 50 km/h | 70 km/h | 90 km/h | 110 km/h | 130 km/h |

(suite)

| | | | | | |
|---|---|---|---|---|---|
| Durée maximum de la récurrence Tr | 70 μs | 50 μs | 39 μs | 32 μs | 27 μs |
| Résolution distance maximum ΔD sur cibles fixes | 0,6 m | 0,8 m | 1m | 1,2 m | 1,5 m |
| Bande utile maximum B sur cibles fixes | 250 MHz | 180 MHz | 150 MHz | 125 MHz | 100 MHz |

De la même façon, le tableau 2 ci-dessous indique en situation routière, les valeurs théoriques maximum de la durée de la récurrence et de la bande utile d'émission pour les cibles fixes et les cibles mobiles, selon la vitesse porteur, en considérant une fréquence d'émission de 76 GHz. On considère ici un véhicule arrivant en sens inverse avec une vitesse maximum de 90 km/h.

Tableau 2

| | | | | | |
|---|---|---|---|---|---|
| Vitesse porteur | 10 km/h | 30 km/h | 50 km/h | 70 km/h | 90 km/h |
| Vitesse relative maximum sur cibles fixes | 10 km/h | 30 km/h | 50 km/h | 70 km/h | 90 km/h |
| Vitesse relative maximum sur cibles mobiles | 100 km/h | 120 km/h | 140 km/h | 160 km/h | 180 km/h |
| Durée maximum de la récurrence Tr | 35 μs | 29 μs | 25 μs | 22 μs | 19 μs |
| Résolution distance maximum ΔD sur cibles fixes | 0,1 m | 0,3 m | 0,5 m | 0,8 m | 1m |
| Bande utile maximum sur cibles fixes | 1,5 GHz | 500 MHz | 300 MHz | 180 MHz | 150 MHz |
| Résolution distance maximum ΔD sur cibles mobiles | 1,1 m | 1,3 m | 1,6 m | 1,8 m | 2m |
| Bande utile maximum sur cibles mobiles | 140 MHz | 115 MHz | 95 MHz | 80 MHz | 75 MHz |

Ces paramètres permettent de fixer selon différentes plages de vitesse du porteur et selon les conditions d'utilisation du radar, typiquement sur route ou sur autoroute:

-    La bande totale à émettre pour obtenir la résolution distance maximum sur les cibles fixes ;

-    La bande maximum utile sur cibles mobiles ;

-    La durée maximum de la récurrence radar.

Une fois ces choix effectués, la bande totale d'émission B et la durée de la récurrence $T_r$ sont fixées.
La période de récurrence $T_r$ est ensuite découpée en P sous-motifs de durée T/P, chaque motif correspondant à une rampe de fréquence d'excursion ΔF=B/P de pente B/T, les motifs étant espacés entre eux d'un écart en fréquence ΔF, l'ensemble couvrant ainsi la bande totale B sur un temps T. Pour la suite de la description P sera pris égal à 4.
Les rampes de fréquence peuvent se succéder de façon continue comme illustré par la figure 2.

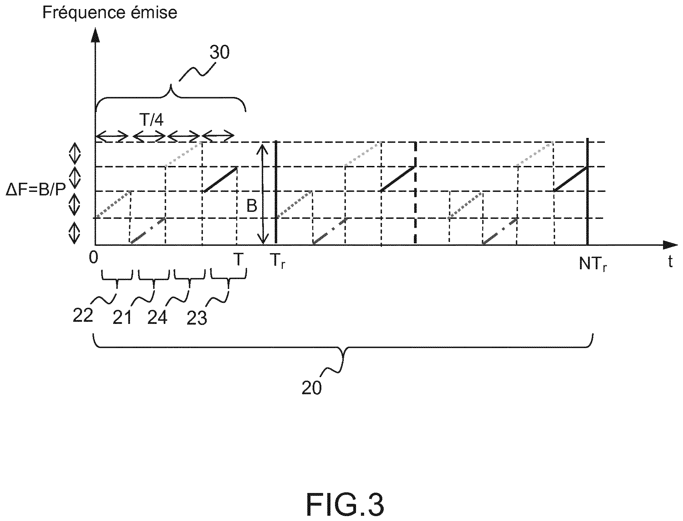

La figure 3 illustre un exemple où les sous-motifs 21, 22, 23, 24sont placés selon un ordre quelconque.

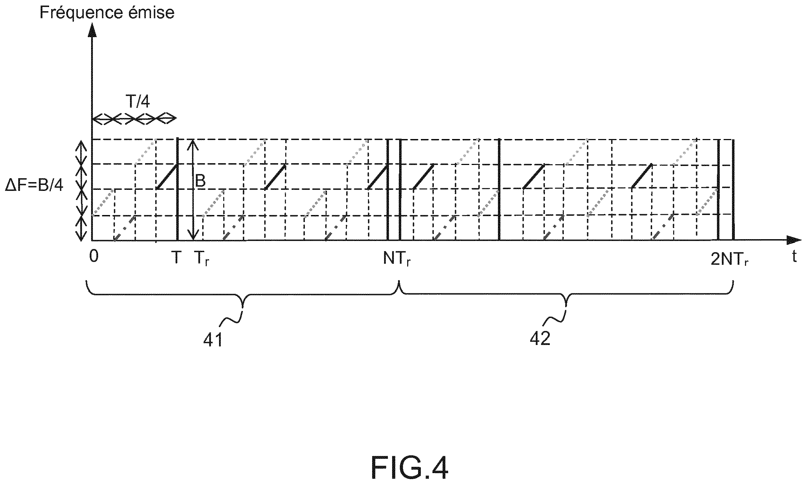

La figure 4 illustre le cas de deux rafales consécutives 41, 42 où l'ordre des sous-motifs à changé entre les deux rafales.De façon préférentielle, l'ordre de succession des sous-motifs est modifié d'une rafale Doppler à la suivante, de façon à diminuer la probabilité d'interférence entre radars du même type, comme illustré par la figure 4
Il peut y avoir un temps mort dans l'émission, d'une récurrence à la suivante (cas où la durée de rampe est inférieure à la période de récurrence, soit T<Tr) ou d'une façon plus générale entre deux motifs successifs. Il faut cependant que ces temps morts soient de durée égale et que la continuité de phase d'émission soit respectée.
A partir des formes d'onde et des sous-motifs ainsi générés, on présente ci-après le traitement appliqué en réception. Celui-ci réalise notamment les opérations suivantes :

-    Réaliser pour chaque sous-motif, un premier traitement en distance, dit à basse résolution, consistant en une compression distance par démodulation directe du signal émis par le signal reçu, suivi d'une transformée de fourrier (FTT) sur M/P points (M/P étant entier) selon un traitement de démodulation synchrone classique d'un radar FMCW, ce traitement aboutissant pour chaque motif à la constitution de M/2P cases distances ;
-    Effectuer sur une suite de N récurrences successives une transformée de Fourrier (FFT ou DFT) sur l'axe Doppler pour chaque case distance et pour chaque sous-motif, aboutissant à P matrices distance-vitesse ambiguës, de dimensions M/2P cases distances par N cases vitesse, le cas échéant, appliquer un traitement de formation de faisceaux par le calcul sur les cartes distance-Doppler ainsi obtenues ;
- A partir des P différentes cartes distance-vitesse ambiguës ainsi obtenues et pour chaque faisceau, appliquer un deuxième traitement distance à résolution optimisée et ajustée selon la vitesse des cibles mobiles attendues ;
- Détecter les cibles présentes dans chacun des faisceaux ;
- Lever l'ambiguïté distance-vitesse sur les cibles détectées dans les cartes distance-vitesse, à partir de la fréquence Doppler non ambiguë.

On décrit maintenant plus en détail le traitement appliqué en réception couvrant toutes ces opérations.

Dans une première étape, on effectue un premier traitement en distance consistant en lacompression distance à basse résolution. Plus précisément, pour chaque sous-motif et à chaque récurrence 10 d'une même rafale Doppler 20, on effectue un traitement de compression distance par démodulation synchrone suivi d'une FFT (ou DFT) sur la durée T/P du sous-motif, aboutissant à une séparation des différentes cibles selon M/P cases distance ambiguës à basse résolution $\frac{PC}{2B}$.

Par exemple, pour une bande totale de 100 Mhz et une découpe de la forme d'onde en quatre sous-motifs (P = 4), la résolution distance en sortie de la FFT est de 6 mètres, correspondant à une bande de 25 MHz. Le signal reçu sur le temps court de la rampe d'indice p après démodulation synchrone, p variant de 0 à P-1 s'écrit :

$$s(t_c) = e^{-2j\pi.\frac{2(D+pv_rT/P)}{C}\left(F+k_p.\frac{B}{P}\right)}.e^{-2j\pi\left(\frac{2DB}{CT}+\frac{2v_r}{\lambda}\right)t_c} \tag{3}$$

Où:

- B est labande totale de fréquence d'émission ;
- P est le nombre de rampes constituant le motif complet 30 (voir la figure 3) ;
- F est la fréquence la plus faible du motif complet ;
- T est la durée du motif complet ;
- D est la distance de la cible au radar ;
- $V_r$ est la vitesse de déplacement de la cible ;
- $t_c$ est le temps « court » correspondant à une durée d'analyse sur un seul sous-motif ;
- $T_r$ est la période de récurrence du motif complet correspondant au temps « long » ;
- n est l'indice de la rampe en cours d'analyse ;
- C est la célérité de la lumière ;
- $k_p$ est le nombre entier compris entre 0 et P-1correspondant au décalage en fréquence $k_pB/P$ de la rampe d'indice p par rapport à F ;
- À est la longueur d'onde du signal d'émission considérée comme constante relativement à l'effet Doppler.

Les indices p et n indiquent le rang des sous-motifs ou des rampes, on utilisera par la suite indifféremment les termes d'indice ou de rang.

On note : $\varphi_{0p} = -2\pi.\frac{2(D+pv_rT/P)}{C}\left(F+k_p.\frac{B}{P}\right)$ , la phase à l'origine pour le sous-motif d'indice p

et : $f_b = \frac{2BD}{CT} + F_d$ avec $F_d = \frac{2V_r}{\lambda}$, la fréquence de battement, identique pour tous les sous-motifs 21, 22, 23, 24.

Le signal reçu sur le temps court de la rampe d'indice p après démodulation synchrone, p variant de 0 à P-1 s'écrit alors :

$$s(t_c) = e^{-j\varphi_{0p}}.e^{-2j\pi f_b t_c} \tag{4}$$

dont la transformée de Fourier sur M points peut s'écrire pour le filtre d'indice m correspondant au maximum d'énergie:

$$S_{p,m} = e^{-j\pi\left(f_b - \frac{m}{T}\right)^{N-1}} \frac{\sin\left(M\pi\left(f_b - \frac{m}{T}\right)\right)}{\sin\left(\pi\left(f_b - \frac{m}{T}\right)\right)} e^{-j\varphi_{0p}}$$

Dans l'expression qui précède, le seul terme dépendant de l'indice p du sous-motif est $e^{-j\varphi_{0p}}$.

Ainsi, on peut exprimer plus simplement la réponse en sortie de la transformée de Fourrier pour le sous-motif de rang p sous la forme :

$$S_{p,m} = K_m e^{-j\varphi_{0p}}$$

où $K_m$ est indépendant de l'indice p du sous-motif.

En généralisant à l'ensemble des récurrences de la rafale Doppler d'indice n, on obtient :

$$S_{p,m}(n) = K_m e^{-j\varphi_{0p}(n)} \quad (5)$$

avec :

$$\varphi_{0p}(n) = -2\pi.\frac{2(D(n) + pv_r T/P)}{C}\left(F + k_p.\frac{B}{P}\right) \quad (6)$$

où $D(n)$ est la distance de la cible à la $n^{\text{ième}}$ récurrence, soit :

$$D(n) = D_0 + v_r n T_r \quad (7)$$

$D_0$ étant la distance à l'origine des temps.

Pour le sous-motif d'indice p, on peut ainsi écrire la phase du signal à la $n^{\text{ième}}$ récurrence:

$$\varphi_{0p}(n) = -2\pi.\frac{2(D_0 + v_r n T_r)\left(F + k_p.\frac{B}{P}\right)}{C} - 2\pi\frac{2(pv_r T/P)\left(F + k_p.\frac{B}{P}\right)}{C}$$

qui peut se simplifier sous la forme :

$$\varphi_{0p}(n) = -\frac{4\pi D_0}{\lambda_p} - 2\pi\frac{pF_d T}{P} - 2\pi F_d n T_r \quad (8)$$

en considérant que

$$F_d = \frac{2v_r F}{C} \cong \frac{2v_r\left(F + k_p.\frac{B}{P}\right)}{C} \quad ,$$

et en posant

$$\lambda_p = \frac{C}{\left(F + k_p.\frac{B}{P}\right)} \quad (9)$$

On constate que $\varphi_{0p}(n)$ contient :

- un terme Doppler, commun à tous les sous-motifs, - $2\pi F_d nT_r$, et ;

- un terme de phase, différent pour chaque motif : $-\frac{4\pi D_0}{\lambda_p} - 2\pi \frac{pF_dT}{P}$.

Dans une deuxième étape, on effectue une FFT (ou DFT) sur chaque case distance correspondant au domaine instrumenté et pour chaque sous-motif, selon l'axe Doppler sur la durée de la rafale Doppler correspondant au temps long $NT_r$.

De façon analogue à la transformée de Fourrier sur l'axe distance, on peut exprimer simplement la réponse en sortie de la transformée de Fourrier sur l'axe Doppler pour le sous-motif de rang p sous la forme :

$$U_{m,n,p} = K'_{m,n} e^{-j\left(\frac{4\pi D_0}{\lambda_p} + 2\pi \frac{pF_dT}{P}\right)} \qquad (10)$$

$K'_{m,n}$ est indépendant de l'indice p du sous-motif.

L'indice m correspond au filtre distance d'indice m, centré sur la distance ambiguë $\frac{PC}{2B}$, de résolution $\frac{PC}{2B}$.

L'indice n correspond au filtre vitesse d'indice n, centré sur la fréquence Doppler $\frac{n}{NT_r}$ de résolution $\frac{1}{NT_r}$.

L'indice p correspond au sous-motif p de la forme d'onde.

A ce stade, le traitement a produit P matrices ou « cartes distance-Doppler » ambiguës, de résolution distance $P\Delta D = \frac{PC}{2B}$ et de résolution Doppler $\Delta F_d = \frac{1}{NT_r}$, comprenant M/2P x N éléments $U_{mn,p}$.

Dans une troisième étape, on effectue la séparation de ces cartes distance-Doppler en au moins deux sous cartes dans le domaine Doppler, la première correspondant selon la vitesse porteur au domaine possible des cibles fixes, et la ou les secondes correspondant au domaine des cibles mobiles selon ou pas une décomposition en sous domaines vitesses.

L'estimation des bornes Doppler du domaine des cibles fixes est obtenue par la connaissance de la vitesse du porteur V, de l'angle d'ouverture et de l'angle de pointage du faisceau radar et de la longueur d'onde À.

En effet, pour un faisceau radar d'ouverture angulaire en azimut $\Delta\theta$ éclairant la route selon l'axe de déplacement du véhicule et pointé dans la direction $\theta=0$, le domaine Doppler des cibles fixes correspondant est compris entre :

$$F_{dmin} = \frac{2V\cos(\Delta\theta/2)}{\lambda} \text{ et } F_{dmax} = \frac{2V}{\lambda}$$

Typiquement, pour $\Delta\theta=3°$, V=36 m/sec et À=3,9 mm, on a :

$F_{dmin}$ = 18492 Hz

$F_{dmax}$ = 18518 *Hz*

La bande Doppler correspondant aux obstacles fixes est limitée à 25 Hz, correspondant à un seul filtre si la durée de la rafale Doppler est de 40 ms, correspondant à une résolution Doppler de 25 Hz.

Pour un faisceau radar d'ouverture angulaire en Azimut $\Delta\theta$ éclairant la route selon l'axe de déplacement du véhicule et pointé par rapport à l'axe $\theta=0$ d'un angle $\alpha$ supérieur à $\Delta\theta$, le domaine Doppler des cibles fixes correspondant est compris entre :

$$F_{dmin} = \frac{2V\cos(\alpha-\Delta\theta/2)}{\lambda} \text{ et } F_{dmax} = \frac{2V\cos(\alpha+\Delta\theta/2)}{\lambda}$$

Toute chose égale par ailleurs, pour un dépointage de 10°, la bande Doppler est alors de 168 Hz, correspondant à 7 filtres.

Cet exemple montre que le domaine Doppler dans lequel il est nécessaire de réaliser un traitement distance avec la résolution maximale est très faible, et peut être isolé facilement. On peut en particulier isoler facilement les cibles fixes.

Le domaine des cibles mobiles peut être lui-même décomposé en différents domaines de vitesses relatives sur lesquels la suite du traitement sera différenciée comme cela sera décrit par la suite.

Cette suite de traitement comporte un deuxième traitement de compression en distance réalisé à partir des P cartes distance-Doppler obtenues à la suite du premier traitement de compression en distance. Ce deuxième traitement est fonction de la vitesse relative attendue de la cible. En particulier, un type de traitement est appliqué aux cibles fixes et un autre type de traitement est appliqué aux cibles mobiles.

On commence par décrire le deuxième traitement en distance, appliqué aux éléments des cartes distance-Doppler correspondant aux cibles fixes.

Dans ce deuxième traitement, le radar vise à comprimer le signal selon la résolution maximum :

$$\Delta D = \frac{C}{2B} = \frac{C}{2P\Delta F}$$

Ce traitement est appliqué sur une première partie limitée de la carte distance-Doppler, correspondant aux cibles fixes, soit sur un nombre de filtresDoppler $N_f$, tel que $N_f$ soit très inférieur à $N(N_f << N)$. Il consiste à réaliser une sommation cohérente, c'est-à-dire en amplitude et en phase, sur l'axe distance des P cartes distance-Doppler ambigües.

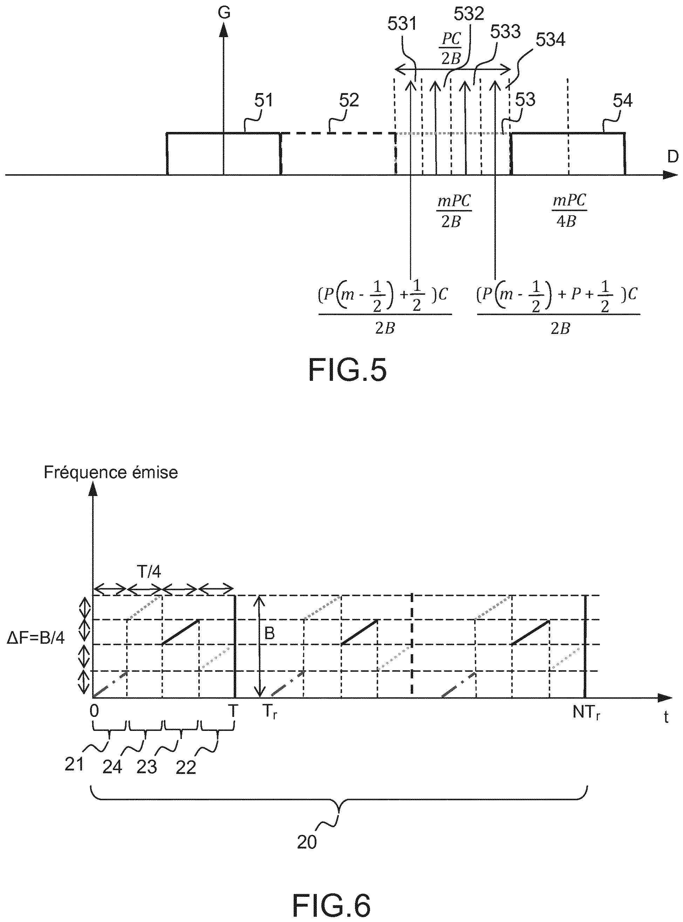

Pour cela, en se référant à la figure 5, chaque filtre distance 51, 52, 53, 54 centré sur $m\dfrac{PC}{2B}$ et de largeur $\dfrac{PC}{2B}$ est décomposé en P filtres adjacents 531, 532, 533, 534 de largeur $\dfrac{C}{2B}$, centré sur la distance :

$$D_{m,p} = \frac{\left(P\left(m-\frac{1}{2}\right)+p+\frac{1}{2}\right)C}{2B}$$

p variant de 0 à P-1.

P est égal à 4 dans l'exemple de la figure 5, chaque filtre étant décomposé en quatre filtres.

Afin d'effectuer la sommation cohérente permettant de comprimer les signaux dans des filtres distance 531, 532, 533, 534 de résolutionC/2B, il est nécessaire de compenser les différences de phase entre les P cartes distance-Doppler qui résultent du décalage fréquentiel et du retard temporel entre les différents sous-motifs 21, 22, 23, 24.

La compensation de phase à appliquer pour chaque sous-motif de rang p, relatif au filtre distance 53 de rang m et au filtre vitesse d'indice n est :

- $+\dfrac{4\pi D_{m,p}}{\lambda_p}$ pour ce qui concerne le décalage fréquentiel et ;

- $2\pi\dfrac{p\frac{n}{NT_r}T}{P}$ pour ce qui concerne le retard temporel.

Ces termes de phase correspondent respectivement à une compensation par rapport à une distance et à une vitesse de cible situées respectivement au centre du filtre distance 531, 532, 533, 534 et au centre du filtre vitesse considéré.

On obtient ainsi une base de P vecteurs unitaires $V_{m,n,p}$ telle que :

$$V_{m,n,p} = e^{j\left(\frac{4\pi D_{m,p}}{\lambda_p}+2\pi\frac{p\frac{n}{NT_r}T}{P}\right)}$$

La compression sur l'axe distance s'effectue en réalisant la somme des projections des P vecteurs $U_{m,n,p}$ sur les P vecteurs $V_{m,n,p}$ selon la relation suivante :

$$W_{m,n,p} = \sum_{p=0}^{P-1} U_{m,n,p} V_{m,n,p}$$

soit :

$$W_{m,n,p} = \sum_{p=0}^{P-1} K'_{m,n} e^{-j\left(\frac{4\pi D_0}{\lambda_p} + 2\pi \frac{pF_d T}{P}\right)} e^{j\left(\frac{4\pi D_{m,p}}{\lambda_p} + 2\pi \frac{p\frac{n}{NTr}T}{P}\right)}$$

A la sortie de ce traitement, on obtient une unique carte distance-Doppler de dimension M/2 cases distance par $N_f$ cases vitesse. Si le radar comprend plusieurs voies de réception, un traitement de formation de faisceau par le calcul est ensuite appliqué sur cette carte distance-vitesse (ou distance-Doppler).

On décrit maintenant le deuxième traitement de compression en distance appliqué aux éléments des cartes distance-Doppler correspondant aux cibles mobiles. L'exemple de traitement décrit est appliqué aux cibles de vitesse relative élevée.

Dans ce deuxième traitement, on vise à comprimer le signal selon une résolution intermédiaire $\Delta D = \frac{QC}{2B}$ (Q étant un entier multiple de 2) adaptée à leur vitesse relative, puis on effectue une sommation non cohérente des cartes distance-Doppler résultantes.

Le traitement de compression dans son principe est identique au traitement décrit pour les cibles fixes, mais décompose le filtre distance non pas en P filtres de largeur $\frac{C}{2B}$ , mais en Q filtres de largeur $\frac{QC}{2B}$.

Il est appliqué sur une seconde partie limitée de la carte distance-Doppler, correspondant aux vitesses élevées, par exemple sur $N_{ve}$ filtres Doppler, tel que $N_{ve} < N$. Il peut par ailleurs être réalisé sur différents domaines vitesse avec des résolutions $\Delta D$ différentes sur l'ensemble du domaine des cibles mobiles.

On réalise une compression partielle en distance pour passer d'une résolution $\frac{PC}{2B}$ à une résolution $\frac{QC}{2B}$ en associant $\frac{P}{Q}$ motifs couvrant $\frac{P}{Q}$ bandes de fréquences adjacentes de largeur $\frac{B}{P}$, l'ensemble couvrant une bande $\frac{B}{Q}$.

Cette opération est effectuée sur l'ensemble des cartes distance-Doppler issues du traitement distance à basse résolution obtenues à partir de tous les sous-motifs, par regroupement des cartes provenant des motifs dont les bandes sont adjacentes et couvrent une bande $\frac{B}{Q}$ .

On obtient ainsi Q cartes distance-vitesse ambiguës de dimension MQ/2 cases distances par $N_{ve}$ filtres vitesse. On réalise ensuite une sommation incohérente des Q cartes distance-vitesse, c'est-à-dire en puissance, ce qui procure un gain de diversité de fréquence lié à la différence des fréquences porteuses des sous-motifs utilisés.

Par exemple, en considérant le cas où la forme d'onde est décomposée en quatre sous-motifs (P = 4), l'ensemble couvrant une bande de Fréquence B comme illustré sur la figure 6, il est possible de réaliser un traitement produisant Q=2 cartes distance-Doppler ayant une résolution distance de $\frac{B}{2}$ en associant d'une part les motifs 21, 22 de rangs 1 et 4, et d'autre part les motifs 24, 23 de rangs 2 et 3.

On réalise ensuite une sommation quadratique des deux cartes ainsi obtenues avec une diversité de fréquence de $\frac{B}{2}$ . .

On décrit ci-après plus en détail cette étape. L'objectif est de décomposer, dans les P cartes distance-vitesse issues du traitement à basse résolution distance, chaque filtre distance 51, 52, 53, 54 centré sur $m\frac{PC}{2B}$ et de largeur $\frac{PC}{2B}$ en Q filtres adjacents de largeur $\frac{QC}{2B}$, centré sur les distances :

$$D_{m,q} = \frac{\left(P\left(m - \frac{1}{2}\right) + \frac{Q}{2}(1+q)\right)C}{2B}$$

q variant de 0 à Q-1.

On considère un nombre entier de $\frac{P}{Q}$ sous-motifs d'émission correspondant à $\frac{P}{Q}$ sous-bandes de fréquence adjacentes de largeur $\frac{B}{P}$, l'ensemble couvrant une bande continue de largeur $\frac{B}{Q}$ à partir de la fréquence F d'émission radar.

En notant :

- j les rangs de ces sous-motifs, pour j variant de 0 à $\frac{P}{Q} - 1$ ;

- Àj la longueur d'onde correspondant à la fréquence $\lambda_j = \frac{C}{\left(F + j \cdot \frac{B}{P}\right)}$ ; et

- $\frac{\alpha_j T}{P}$ le retard du sous-motif de rang j par rapport au sous-motif du premier rang (indice 0) ;

en sortie du traitement Doppler, le signal relatif au motif de rang j correspondant à la distance $D_0$ et au Doppler $F_d$ s'écrit :

$$U_{m,n,j} = K'_{m,n} e^{-j\left(\frac{4\pi D_0}{\lambda_j} + 2\pi \frac{\alpha_j F_d T}{P}\right)}$$

et la compensation de phase à appliquer pour chaque sous-motif de rang j, relatif au filtre distance d'origine de rang m et au filtre vitesse de rang n est :

- $+\frac{4\pi D_{m,q}}{\lambda_j}$ pour ce qui concerne le décalage fréquentiel et ;

- $2\pi \frac{\alpha_j \frac{n}{NT_r} T}{P}$ pour ce qui concerne le retard temporel du sous-motif j par rapport à l'origine des temps de la récurrence en cours.

Ces termes de phase correspondent respectivement à une compensation par rapport à une distance et à une vitesse de cible situées respectivement au centre du filtre distance et au centre du filtre vitesse considéré.

On obtient ainsi une base de $\frac{P}{Q}$ vecteurs unitaires $V_{m,n,j}$ telle que :

$$V_{m,n,j} = e^{j\left(\frac{4\pi D_{m,q}}{\lambda_j} + 2\pi \frac{\alpha_j \frac{n}{NT_r} T}{P}\right)}$$

La compression sur l'axe distance s'effectue en réalisant les P/Q sommes des projections des Q vecteurs $U_{m,n,j}$ sur les P vecteurs $V_{m,n,j}$ selon la relation suivante :

$$W_{m,n,q} = \sum_{j=0}^{\frac{P}{Q}-1} U_{m,n,j} V_{m,n,j}$$

soit :

$$W_{m,n,q} = \sum_{j=0}^{\frac{P}{Q}-1} K'_{m,n} e^{-j\left(\frac{4\pi D_0}{\lambda_j} + 2\pi \frac{\alpha_j F_d T}{P}\right)} e^{j\left(\frac{4\pi D_{m,q}}{\lambda_j} + 2\pi \frac{\alpha_j \frac{n}{NT_r}T}{P}\right)}$$

A l'issue de ce traitement, on obtient une matrice distance-Doppler de dimension MQ/2 cases distances par $N_{ve}$ filtres Doppler. L'opération est répétée sur les P-P/Q sous-motifs restants pour former Q matrices distance-Doppler de dimension MQ/2 cases distances par $N_{ve}$ filtres Doppler. Finalement, on obtient une nouvelle carte distance-Doppler ayant une résolution en distance augmentée.

Si le radar comprend plusieurs voies de réception, un traitement de formation de faisceau par le calcul est ensuite appliqué sur ces Q cartes distance-vitesse. On réalise alors pour chaque faisceau une sommation non cohérente des différentes matrices ainsi obtenues pour obtenir une seule matrice comprenant MQ/2 cases distances par $N_{ve}$ filtres Doppler.

Dans une étape suivante, pour les éléments des cartes distance-Doppler correspondant aux cibles mobiles de vitesses relatives les plus faibles, on effectue la sommation non cohérente des P cartes distance-Doppler obtenues par le traitement de compression distance à basse résolution.

Ce traitement est appliqué sur la dernière partie limitée de la carte distance-Doppler, correspondant aux vitesses faibles par exemple sur $N_{vf}$ filtres Doppler, tel que $N_{vf}<N$, avec $N=N_f+N_{ve}+N_{vf}$.

Si le radar comprend plusieurs voies de réception, un traitement de formation de faisceau par le calcul est au préalable appliqué sur les P cartes distance-vitesse. On réalise alors pour chaque faisceau une sommation non cohérente des différentes cartes ainsi obtenues pour obtenir une seule carte comprenant M/2 cases distances par $N_{vf}$ filtres Doppler.

Pour l'ensemble des cartes distance-vitesse obtenues, détection des cibles puis levée d'ambiguïté distance-vitesse en utilisant la fréquence Doppler non ambiguë et recalage des cibles détectées sur l'axe distance pour chaque faisceau.

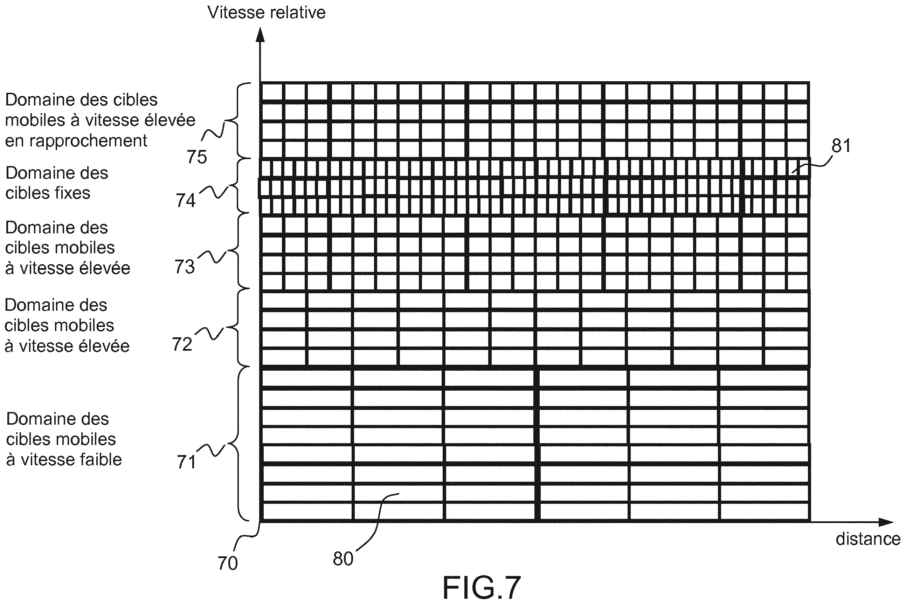

La figure 7 représente symboliquement l'allure de la décomposition en filtres distance/Doppler du domaine instrumenté par le radar à l'issue des traitements décrits précédemment.L'axe des abscisses représente la distance, l'origine 70 correspond à la position du radar. L'axe des ordonnées représente la vitesse relative des cibles par rapport au radar. Un filtre distance/Doppler 80 est caractérisé par une largeur en distance et une largeur en vitesse.

La décomposition est effectuée selon des cases distances dont la dimension est ajustée en fonction de la vitesse relative des cibles.La largeur en vitesse reste par exemple constante. A cet effet, le domaine vitesse est découpé en plusieurs zones ou domaines 71, 72, 73, 74, 75 et pour chacune de ces zones correspond une largeur en distance du filtre distance/vitesse. A côté du domaine des cibles fixes, plusieurs domaines de vitesses sont pris en compte.

Un premier domaine de vitesses 71 correspond aux cibles mobiles à vitesse faible, ce domaine correspond aux applications de type ACC. Ce sont des cibles en rapprochement du véhicule porteur du radar, roulant devant lui mais moins vite.Un deuxième domaine de vitesses 72 couvre les cibles mobiles à vitesse plus élevée. Un troisième domaine de vitesses 73 couvre les cibles mobiles à vitesse encore plus élevée. Un quatrième domaine 74 correspond aux cibles fixes et un cinquième domaine correspond à des cibles mobiles à vitesses élevées en rapprochement en sens inverse. Ce cas correspond à des véhicules de croisement et n'existe pas sur autoroute notamment.

La carte distance-Doppler de la figure 7 montre que les cases distances les plus petites 81 sont affectées aux cibles fixes, c'est-à-dire que la résolution en distance est maximum pour les cibles fixes et plus faible pour les cibles mobiles. En ajustant la largeur des cases distances à la vitesse, on diminue de façon significative le volume de traitement et de calculs à effectuer. Ainsi, pour le premier domaine 71 on utilise des filtres de largeur en distance plus importante, ce qui limite le nombre de filtres et donc le nombre de calculs. Avantageusement, la portée instrumentée et la résolution distance peuvent également être ajustées de façon différenciée en fonction de la direction du faisceau considéré et de la distance pour limiter encore le volume de calculs. On présente pour finir un exemple d'application où l'on considère le véhicule porteur du radar circulant sur une autoroute à une vitesse V = 130 km/h. Selon le tableau 1 présenté précédemment, la bande utile maximum sur cible fixe est de 100 MHz, correspondant à une résolution distance de 1,5 m, et la durée maximum de la récurrence est de 27 $\mu$s pour une durée de rafale Doppler de 40 ms.

On peut choisir par exemple une durée de récurrence de 19,5 $\mu$s pour réaliser le traitement Doppler par une FFT sur N= 2048 points. La forme d'onde peut être divisée conformément à la figure 6 en quatre sous-motifs de largeur de bande 25 MHz, l'ensemble couvrant une bande de 100 MHz.

En considérant un faisceau de 3° d'ouverture en azimut dépointé de 10° par rapport à l'axe du véhicule, le domaine des cibles fixes occupe sept filtres vitesse sur lesquels on effectue un traitement à résolution distance maximale. On peut par exemple découper le domaine vitesse restant en deux sous-bandes couvrant typiquement :

- de 0 à 65 km/h pour le premier ; et
- de 65 à 129,6 km/h pour le second ;

sur lesquelles on réalise respectivement un traitement de compression distance avec une résolution de 6 m et de 3 m, correspondant à une bande de fréquence de 25 MHz et de 50 MHz.

Par rapport à un radar réalisant une compression en distance avec la résolution maximum de 3 m sur l'ensemble du domaine vitesse, le nombre de cases distance est approximativement divisé par deux sur la moitié du domaine et par quatre sur l'autre moitié, ce qui correspond globalement à une réduction du volume de calcul de 60 %.

En adaptant automatiquement la forme d'onde et le traitement associé en fonction du contexte, en particulier en fonction de la vitesse du porteur et des conditions de mise en œuvre, l'invention permet avantageusement d'optimiser simultanément les performances du radar et les ressources de traitement utilisées pour détecter à la fois les objets mobiles et les objets fixes sur l'ensemble de la portée radar. Elle permet un maximum de résolution en distance sur les obstacles fixes et une résolution distance plus faible sur les obstacles mobiles qui sont séparés par le traitement Doppler, ce qui minimise la charge de calcul. En mode « basse résolution distance », la probabilité de détection des cibles est de plus favorisée par diversité de fréquence.

L'invention permet également de diminuer les risques de perturbations mutuelles entre radars du même type, du fait de la diversité des formes d'ondes susceptibles d'être utilisées à un instant donné par ces radars. Elle permet par ailleurs d'optimiser le rendement de la forme d'onde, car il n'est pas nécessaire d'entrelacer des formes d'ondes différentes pour traiter l'ensemble du domaine distance-vitesse. Enfin, elle n'augmente pas le volume de l'électronique ni la complexité du radar. En effet, le procédé selon l'invention peut être mis en œuvre par les radars existant sans modification de leurs circuits de réception ou de leurs circuits de traitement. En particulier, le traitement est simple et facile à mettre en œuvre.

Un radar mettant en œuvre le procédé selon l'invention peut avantageusement équiper un véhicule automobile, pour détecter les obstacles fixes ou mobiles présents dans l'environnement du véhicule. En particulier, le radar peut être utilisé pour une fonction d'anticollision.

## Revendications

1. Procédé de détection radar d'une cible mettant en œuvre une forme d'onde du type FMCW, la forme d'onde à l'émission étant réalisée selon un motif de récurrence (10) de période donnée Tr couvrant une bande de fréquences d'émission de largeur donnée B, chaque motif étant découpé selon un nombre donné P de sous-motifs (21, 22, 23, 24) de durée Tr/P couvrant une bande de fréquence d'excursion $\Delta F=B/P$, lesdits sous-motifs étant espacés entre eux d'un écart de fréquence égal à $\Delta F$, ledit procédé effectuant:

   - un premier traitement de compression distance réalisant une compression distance à basse résolution à l'échelle de chaque motif de récurrence (10) à partir d'une fraction B/P de ladite bande d'émission de largeur B, correspondant à la bande de fréquence couverte par chacun desdits sous-motifs (21, 22, 23, 24) ;

   ledit traitement étant **caractérisé en ce qu'**il effectue :

   - un traitement Doppler sur un nombre donné N de récurrences successives de façon à constituer P cartes distance-Doppler ambiguës à basse résolution en distance, lesdites cartes étant segmentées selon au moins deux domaines de vitesse (71, 72, 73, 74, 75) dont l'un correspond aux cibles fixes ;
   - un deuxième traitement de compression distance à partir desdites cartes distance-Doppler, dont la résolution est fonction du domaine de vitesses (71, 72, 73, 74, 75) auquel appartient la vitesse attendue de ladite cible,

   dans ledit premier traitement ladite compression consistant, pour chaque sous-motif (21, 22, 23, 24) en une compression distance par démodulation directe du signal émis par le signal reçu, suivie d'une transformée de Fourier sur M/P points selon une démodulation synchrone aboutissant pour chaque motif à la constitution de M/2P cases distances, M/P étant un nombre entier, ladite vitesse attendue correspondant à une cible mobile, ledit deuxième traitement réalisant une intégration cohérente sur l'ensemble desdites cartes distance-Doppler pour donner une nouvelle carte distance-Doppler, ladite intégration cohérente étant réalisée de telle façon qu'une intégration cohérente soit réalisée sur chaque regroupement de cartes distance-Doppler correspondant à des sous-motifs (21, 22, 23, 24) couvrant des bandes de fréquences adjacentes.

2. Procédé selon la revendication 1, **caractérisé en ce que** ledit traitement Doppler effectue, sur lesdites N récurrences successives, une transformée de Fourier sur l'axe Doppler pour chacune desdites cases distance et pour chaque sous-motif, aboutissant à la constitution desdites P cartes distance-Doppler, chacune de dimension M/2P cases distances par N cases Doppler.

3. Procédé selon l'une quelconque des revendications précédentes, **caractérisé en ce que** ladite résolution est maximum pour les cibles fixes.

4. Procédé selon la revendication 3, **caractérisé en ce que**, ladite vitesse attendue correspondant à une cible fixe, le deuxième traitement effectue la compression selon la résolution maximum en réalisant l'intégration cohérente desdites P cartes distance-Doppler selon chacun des filtres distances (531, 532, 533, 534) centrés sur lesdits sous-motifs (21, 22, 23, 24) de résolution $\frac{C}{2B}$ , C étant la célérité de la lumière.

5. Procédé selon la revendication 4, **caractérisé en ce que** ladite intégration cohérente est réalisée après compensation des retards et des différences de fréquence entre lesdits sous-motifs.

6. Procédé selon l'une quelconque des revendications précédentes, **caractérisé en ce que**, ladite vitesse attendue étant élevée, le deuxième traitement effectue l'intégration non cohérente d'au moins deux cartes distance-Doppler de même résolution distance.

7. Procédé selon l'une quelconque des revendications précédentes, **caractérisé en ce que** l'ordre desdits sous-motifs (21, 22, 23, 24) est modifié d'une rafale d'émission (41) à la suivante (42).

8. Procédé selon l'une quelconque des revendications précédentes, **caractérisé en ce que** la période Tr dudit motif de récurrence (10) est ajustée en fonction de la vitesse du porteur dudit radar et de la fréquence d'émission pour respecter la condition de non-ambiguïté Doppler sur les cibles en vitesse de rapprochement maximum.

9. Procédé selon l'une quelconque des revendications précédentes, **caractérisé en ce qu'**une formation de faisceaux par le calcul étant réalisée en réception sur chacune desdites cartes distance-Doppler à basse résolution en distance, le deuxième traitement est réalisé pour chaque faisceau.

10. Procédé selon l'une quelconque des revendications précédentes, **caractérisé en ce que** ladite résolution en distance est fonction de la direction du faisceau en réception.

11. Procédé selon l'une quelconque des revendications précédentes, **caractérisé en ce que** l'ambiguïté sur la mesure de distance est levée par la mesure de la fréquence Doppler.

12. Radar de type FMCW, **caractérisé en ce qu'**il est configuré pour mettre en œuvre le procédé selon l'une quelconque des revendications précédentes.

13. Radar selon la revendication 12, **caractérisé en ce qu'**il est apte à équiper un véhicule automobile.

14. Radar selon la revendication 13, **caractérisé en ce qu'**il est utilisé pour une fonction d'anticollision.

**Patentansprüche**

1. Verfahren zur Radar-Detektion eines Ziels, welches eine Wellenform vom Typ FMCW einsetzt, wobei die Wellenform im Sendebetrieb entsprechend eines Rekurrenzmotivs (10) mit einer gegebenen Periode Tr gebildet wird, welches ein Sendefrequenzband mit einer gegebenen Breite B abdeckt, wobei jedes Motiv in eine gegebene Anzahl P Teilmotive (21, 22, 23, 24) mit einer Dauer Tr/P unterteilt ist, welche ein Abweichungsfrequenzband $\Delta F=B/P$ abdecken, wobei die Teilmotive voneinander um eine Frequenzabweichung gleich $\Delta F$ beabstandet sind, wobei das Verfahren Folgendes bewerkstelligt:

- eine erste Entfernungs-Kompressionsverarbeitung, welche eine niedrig auflösende Entfernungs-Kompression im Maßstab eines jeden Rekurrenzmotivs (10) anhand eines Bruchs B/P des Sendebandes mit der Breite B bewerkstelligt, welches dem durch jedes der Teilmotive (21, 22, 23, 24) abgedeckten Frequenzband entspricht;

wobei die Verarbeitung **dadurch gekennzeichnet ist, dass** sie Folgendes bewerkstelligt:

- eine Dopplerverarbeitung an einer gegebenen Anzahl N von aufeinanderfolgenden Rekurrenzen, um P zweideutige Entfernungs-Doppler-Karten mit niedriger Entfernungsauflösung zu bilden, wobei die Karten nach mindestens zwei Geschwindigkeitsbereichen (71, 72, 73, 74, 75) segmentiert sind, wovon einer den festen Zielen entspricht;

- eine zweite Entfernungs-Kompressionsverarbeitung anhand der Entfernungs-Doppler-Karten, deren Auflösung abhängig vom Geschwindigkeitsbereich (71, 72, 73, 74, 75) ist, dem die erwartete Geschwindigkeit des Ziels angehört,

wobei in der ersten Verarbeitung die Kompression für jedes Teilmotiv (21, 22, 23, 24) in einer Entfernungs-Kompression durch direkte Demodulation des gesendeten Signals durch das empfangene Signal besteht, gefolgt von einer Fourier-Transformierte an M/P Punkten gemäß einer synchronen Demodulation, welche für jedes Motiv die Bildung von M/2P Entfernungs-Feldern bewirkt, wobei M/P eine Ganzzahl ist,

wobei die erwartete Geschwindigkeit einem mobilen Ziel entspricht, wobei die zweite Verarbeitung eine kohärente Integration über sämtliche Entfernungs-Doppler-Karten bewerkstelligt, um eine neue Entfernungs-Doppler-Karte zu ergeben, wobei die kohärente Integration so bewerkstelligt wird, dass eine kohärente Integration für jede Gruppe von Entfernungs-Doppler-Karten bewerkstelligt wird, welche Teilmotiven (21, 22, 23, 24) entspricht, welche benachbarte Frequenzbänder abdecken.

2. Verfahren nach Anspruch 1, **dadurch gekennzeichnet, dass** die DopplerVerarbeitung an den N aufeinanderfolgenden Rekurrenzen eine Fourier-Transformierte auf der Doppler-Achse für jedes der Entfernungs-Felder und für jedes Teilmotiv bewerkstelligt, was zur Bildung der P Entfernungs-Doppler-Karten führt, wobei jede eine Abmessung von M/2P Entfernungsfeldern pro N Dopplerfelder aufweist.

3. Verfahren nach einem der vorhergehenden Ansprüche, **dadurch gekennzeichnet, dass** die Auflösung bei festen Zielen maximal ist.

4. Verfahren nach Anspruch 3, **dadurch gekennzeichnet, dass**, da die erwartete Geschwindigkeit einem festen Ziel entspricht, die zweite Verarbeitung die Kompression gemäß der maximalen Auflösung bewerkstelligt, indem sie die kohärente Integration der P Entfernungs-Doppler-Karten gemäß einem jeden der Entfernungsfilter (531, 532, 533, 534) bewerkstelligt, welche auf die Teilmotive (21, 22, 23, 24) mit einer Auflösung $\frac{C}{2B}$ zentriert sind, wobei C die Lichtgeschwindigkeit ist.

5. Verfahren nach Anspruch 4, **dadurch gekennzeichnet, dass** die kohärente Integration nach Kompensation der Verzögerungen und der Frequenzunterschiede zwischen den Teilmotiven bewerkstelligt wird.

6. Verfahren nach einem der vorhergehenden Ansprüche, **dadurch gekennzeichnet, dass**, da die erwartete Geschwindigkeit hoch ist, die zweite Verarbeitung die nicht kohärente Integration mindestens zweier Entfernungs-Doppler-Karten gleicher Entfernungsauflösung bewerkstelligt.

7. Verfahren nach einem der vorhergehenden Ansprüche, **dadurch gekennzeichnet, dass** die Reihenfolge der Teilmotive (21, 22, 23, 24) von einer Sendesalve (41) zur nächsten (42) verändert wird.

8. Verfahren nach einem der vorhergehenden Ansprüche, **dadurch gekennzeichnet, dass** die Periode Tr des Rekurrenzmotivs (10) angesichts der Geschwindigkeit des Trägers des Radars und der Sendefrequenz angepasst wird, um die Bedingung der Doppler-Unzweideutigkeit bei den Zielen mit maximaler Annäherungsgeschwindigkeit zu erfüllen.

9. Verfahren nach einem der vorhergehenden Ansprüche, **dadurch gekennzeichnet, dass**, da eine Strahlenbildung durch die Berechnung im Empfang an jeder der Entfernungs-Doppler-Karten mit niedriger Entfernungsauflösung bewerkstelligt wird, die zweite Verarbeitung für jeden Strahl bewerkstelligt wird.

10. Verfahren nach einem der vorhergehenden Ansprüche, **dadurch gekennzeichnet, dass** die Entfernungsauflösung von der Richtung des Strahls im Empfang abhängt.

11. Verfahren nach einem der vorhergehenden Ansprüche, **dadurch gekennzeichnet, dass** die Zweideutigkeit in der Entfernungsmessung durch die Messung der Dopplerfrequenz beseitigt wird.

**12.** FMCW-Radar, **dadurch gekennzeichnet, dass** er konfiguriert ist, um das Verfahren nach einem der vorhergehenden Ansprüche umzusetzen.

**13.** Radar nach Anspruch 12, **dadurch gekennzeichnet, dass** er in der Lage ist, ein Kraftfahrzeug auszurüsten.

**14.** Radar nach Anspruch 13, **dadurch gekennzeichnet, dass** er für eine Antikollisionsfunktion verwendet wird.

**Claims**

**1.** Radar target-detection method implementing an FMCW waveform, **characterized in that** the emitted waveform being formed of a recurring pattern (10) of given period Tr covering an emission frequency band of given width B, each pattern being divided into a given number P of sub-patterns (21, 22, 23, 24) of duration Tr/P covering an excursion frequency band ΔF=B/P, said sub-patterns being mutually spaced by a frequency interval equal to ΔF, said method performs:

> - a first distance-compression processing operation carrying out a low-resolution distance compression at the scale of each recurring pattern (10) from a fraction B/P of said emission band of width B corresponding to the frequency band covered by each of said sub-patterns (21, 22, 23, 24);

said processing being **characterized in that** it performs:

> - a Doppler processing operation on a given number N of successive recurrences so as to form P ambiguous distance-Doppler maps of low distance resolution, said maps being segmented into at least two speed domains (71, 72, 73, 74, 75) one of which corresponds to the stationary targets;
> - a second distance-compression processing operation from said distance maps, the resolution of which is dependent on the speed domain (71, 72, 73, 74, 75) to which the expected speed of said target belongs,

in said first processing operation said compression consisting, for each sub-pattern (21, 22, 23, 24), in a distance compression by direct demodulation of the emitted signal with the received signal, followed by an M/P-point Fourier transform in a synchronous demodulation operation leading, for each pattern, to the formation of M/2P distance boxes, M/P being an integer,
said expected speed corresponding to a moving target, said second processing operation carrying out a coherent integration over all of said distance-Doppler maps in order to produce a new distance-Doppler map, said coherent integration being carried out in such a way that a coherent integration is carried out on each group of distance-Doppler maps corresponding to sub-patterns (21, 22, 23, 24) covering adjacent frequency bands.

**2.** Method according to Claim 1, **characterized in that** said Doppler processing operation performs, on said N successive recurrences, a Fourier transform on the Doppler axis for each of said distance boxes and for each sub-pattern, leading to the formation of said P distance-Doppler maps, each being M/2P distance boxes by N Doppler boxes in size.

**3.** Method according to any one of the preceding claims, **characterized in that** said resolution is maximum for stationary targets.

**4.** Method according to Claim 3, **characterized in that**, said expected speed corresponding to a stationary target, the second processing operation performs the compression to the maximum resolution by carrying out the coherent integration of said P distance-Doppler maps according to any one of the distance filters (531, 532, 533, 534) centred on said sub-patterns (21, 22, 23, 24) of resolution $\frac{C}{2B}$, C being the speed of light.

**5.** Method according to Claim 4, **characterized in that** said coherent integration is carried out after compensation of delays and frequency differences between said sub-patterns.

**6.** Method according to any one of the preceding claims, **characterized in that**, said expected speed being high, the second processing operation performs the non-coherent integration of at least two distance-Doppler maps of the same distance resolution.

7. Method according to any one of the preceding claims, **characterized in that** the order of said sub-patterns (21, 22, 23, 24) is modified from one emission burst (41) to the following (42).

8. Method according to any one of the preceding claims, **characterized in that** the period Tr of said recurring pattern (10) is adjusted depending on the speed of the carrier of said radar and on the emission frequency in order to meet the condition of Doppler unambiguity for targets approaching at maximum speed.

9. Method according to any one of the preceding claims, **characterized in that**, digital beamforming being carried out on reception on each of said distance-Doppler maps of low distance resolution, the second processing operation is carried out for each beam.

10. Method according to any one of the preceding claims, **characterized in that** said distance resolution depends on the direction of the beam on reception.

11. Method according to any one of the preceding claims, **characterized in that** the ambiguity in the distance measurement is removed by the measurement of the Doppler frequency.

12. FMCW radar, **characterized in that** it is able to implement the method according to any one of the preceding claims.

13. Radar according to Claim 12, **characterized in that** it is possible to equip a motor vehicle with it.

14. Radar according to Claim 13, **characterized in that** it is used for an anti-collision function.

Fréquence émise

B

1

0      T   $T_r$               $NT_r$    t

10

Temps court : traitement distance sur la durée de la récurrence

20

Temps long : traitement doppler sur la durée de la rafale (N récurrences)

## FIG.1

Fréquence émise

10

T/4

$\Delta F = B/4$

B

0       T   $T_r$                $NT_r$    t

21   22   23    24

20

## FIG.2

FIG.3

FIG.4

FIG.5

FIG.6

Vitesse relative

Domaine des cibles
mobiles à vitesse élevée
en rapprochement
75

Domaine des
cibles fixes
74

Domaine des
cibles mobiles
à vitesse élevée
73

Domaine des
cibles mobiles
à vitesse élevée
72

Domaine des
cibles mobiles
à vitesse faible
71

70

80

81

distance

FIG.7

EP 3 282 283 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010277361 A1